# EUROPÄISCHE PATENTSCHRIFT

(11) **EP 3 431 380 B1**
(45) Veröffentlichungstag und Bekanntmachung des Hinweises auf die Patenterteilung: **18.08.2021**
(21) Anmeldenummer: 18170094.9
(22) Anmeldetag: 30.04.2018
(51) Int. Cl.: B62M 11/14, B62M 11/18, B62M 3/00

(54) **TRETLAGERANTRIEB EINES FAHRRADS**
GEAR CRANK DRIVE OF A BICYCLE
MÉCANISME D'ENTRAÎNEMENT DE PÉDALIER D'UNE BICYCLETTE

(30) Priorität: 19.07.2017 DE 102017212347
(43) Veröffentlichungstag der Anmeldung: 23.01.2019
(73) Patentinhaber: Robert Bosch GmbH, 70442 Stuttgart (DE)
(72) Erfinder: Hinterkausen, Markus, 71696 Moeglingen (DE); Kimmich, Peter, 71144 Steinenbronn (DE)

(56) Entgegenhaltungen:
- EP-A2- 2 241 784
- WO-A1-2011/065850
- WO-A1-2018/046172
- CH-A- 45 687
- DE-A1- 2 619 500

## Beschreibung

### Stand der Technik

Die vorliegende Erfindung betrifft einen Tretlagerantrieb eines Fahrrads. Das Fahrrad weist insbesondere einen Elektromotor als Hilfsantrieb auf und stellt somit ein Pedelec oder eBike dar. Im Rahmen der Beschreibung dieser Erfindung werden die Worte umfassen und aufweisen als Synonym verwendet.

Aus dem Stand der Technik sind Elektrofahrräder, d.h. Pedelecs oder eBikes, bekannt, die einen Mittelmotor und eine Fahrradschaltung zur Anpassung der begrenzten Antriebskraft durch den Fahrer an unterschiedliche Fahrwiderstände aufweisen. Bei Elektrofahrrädern mit Tretlagerantrieb wird üblicherweise eine Kettenschaltung oder Nabenschaltung an dem Hinterrad angebracht, während der elektrisch Antrieb an dem Tretlager angeordnet ist.

Aus den Veröffentlichungen DE 10 2012 109 637 A1 und DE 10 2014 000 898 A1 ist ein Tretlagerantrieb mit integriertem Schaltgetriebe bekannt, welcher einen Hohlwellenmotor koaxial zur Tretkurbelwelle und ein zur Tretkurbelwelle achsparalleles Schaltgetriebe aufweist. In DE 10 2013 220 299 A1 und DE 10 2014 007 271 A1 ist die Integration eines Reibrings-Getriebes als stufenlos verstellbares Fahrradschaltgetriebe in einen Tretlagerantrieb beschrieben. Allerdings hat ein Reibring-Getriebe aufgrund der Kraftübertragung per Reibschluss einen geringen Wirkungsgrad, der sich auf die Batteriereichweite und die Fahrbarkeit ohne Motorunterstützung, insbesondere bei Geschwindigkeiten oberhalb von 7 m/s (ca. 25 km/h), deutlich auswirkt.

Tretlagerantriebe mit integrierten Schaltungen auf der Basis von Stirnradgetrieben, wie beispielsweise in DE 10 2010 051 727 A1 oder EP2 881 315 A2 beschrieben, haben den Nachteil einer vergleichsweise geringen Drehmomentdichte und sind insbesondere beim Herunterschalten in einen niedrigeren Gang nicht unter Last oder nur unter Teillast schaltbar. Des Weiteren weisen solche Schaltungen keine elektromechanisch aktuierte automatische Gangwahl auf. Konzepte wie in WO 2013/160477 A1 haben den Nachteil, dass das Schalten nicht zugkraftunterbrechungsfrei erfolgt. Der Fahrer erfährt somit einen deutlich spürbaren Leerweg der Tretkurbeln. Das Schalten in Konzepten wie in DE 10 2012 109 637 A1, DE 10 2014 000 898 A1 oder DE 10 2010 051 727 A1 erfolgt durch Festhalten oder Freigeben der Zahnräder mittels Klinken, welche um die zentrale Welle der Zahnräder angeordnet sind und radial von innen in den Radkörper formschlüssig eingreifen.

Das Dokument EP 2 241 784 A2 zeigt die Merkmale der Präambel des Anspruchs 1. Weiterhin zeigt das Dokument WO 2018/046172 A1, welches Stand der Technik nach Art. 54(3) EPÜ darstellt, alle Merkmale des Anspruchs 1 bis auf eine aufsteigende oder absteigende Änderung des Übersetzungsverhältnisses bei einer fortgesetzten Verschiebung der Schaltkulisse.

### Offenbarung der Erfindung

Der erfindungsgemäße Tretlagerantrieb erlaubt ein automatisches und insbesondere unter Last durchgeführtes Schalten zwischen einzelnen Gängen. Dazu ist eine linear bewegliche Schaltkulisse vorhanden, die durch lineares Verschieben einzelne Zahnräder blockieren und freigeben kann.

Der Tretlagerantrieb eines Fahrzeugs umfasst eine Tretkurbelwelle und eine Getriebeanordnung. Die Tretkurbelwelle ist zum Bedienen durch einen Fahrer vorgesehen. Insbesondere ist die Tretkurbelwelle mit Pedalen versehen, über die der Fahrer ein Drehmoment auf die Tretkurbelwelle aufbringen kann. Die Tretkurbelwelle weist bevorzugt eine Mittelachse auf, wobei sich im Folgenden sämtliche Richtungsangaben axial oder radial auf die Mittelachse beziehen. Die Getriebeanordnung ist auf der Tretkurbelwelle angeordnet und umfasst eine Vielzahl von untereinander verbundenen Planetengetrieben. Durch die Planetengetriebe sind insbesondere mehrere Freiheitsgrade der Getriebeanordnung definiert, sodass durch Blockierung einzelner Freiheitsgrade unterschiedliche Übersetzungen der Getriebeanordnung realisiert werden können. Insbesondere lassen sich auf dies Weise mehrere Gänge realisieren. Die Getriebeanordnung mündet besonders vorteilhaft in einem Kettenblatt, wobei das Kettenblatt für eine Kraftübertragung an ein Antriebsrad des Fahrrads vorgesehen ist, beispielsweise über einen Kettentrieb.

Der Tretlagerantrieb weist weiterhin eine gegenüber der Tretkurbelwelle rotationsfest angeordnete Schaltkulisse auf. Die Schaltkulisse ist insbesondere an einem Gehäuse des Tretlagerantriebs gelagert und ist somit relativ zu der Tretkurbelwelle nicht verdrehbar. Allerdings ist vorgesehen, dass die Schaltkulisse entlang einer axialen Richtung der Tretkurbelwelle verschiebbar ist. Durch eine solche Verschiebung ist insbesondere ermöglicht, einzelne oder mehrere Freiheitsgrade der Getriebeanordnung zu blockieren. Dazu ist vorgesehen, dass Sonnräder der Planetengetriebe jeweils einen Schaltfinger aufweisen. Jeder Schaltfinger erstreckt sich bezüglich der Tretkurbelwelle radial nach außen. Besonders bevorzugt sind die Sonnräder der Planetengetriebe mit je einem Schaltelement in zumindest eine Richtung drehfest verbunden, wobei sich jedes Schaltelement ringförmig um die Tretkurbelwelle erstreckt. Die Schaltfinger stellen radiale Vorsprünge des Schaltelements dar. In jedem Fall ist durch Blockieren der Schaltfinger ermöglicht, das zugehörige Sonnenrad des Planetengetriebes gegenüber der Tretkurbelwelle festzustellen. Dadurch ist eine Rotation des zugehörigen Sonnenrads verhindert. Auf diese Weise lässt sich ein Drehmomentfluss durch die Getriebeanordnung variieren, sodass unterschiedliche Übersetzungen realisierbar sind.

Die Schaltkulisse weist Blockierelemente auf, wobei die Blockierelemente parallel zu der radialen Richtung der Tretkurbelwelle mit zumindest einem Schaltfinger überlappen. Dies bedeutet, dass durch Verschiebung der Schaltkulisse eine Rotation einzelner oder mehrerer Schaltfinger um die Tretkurbelwelle verhindert ist, indem die Blockierelement auch in axialer Richtung mit den Schaltfingern überlappen. Eine Änderung des Übersetzungsverhältnisses ist somit lediglich durch Verschieben der Schaltkulisse ermöglicht. Zwischen den Blockierelementen sind bevorzugt Zwischenräume vorhanden, die in radialer Richtung nicht mit einem Schaltfinger oder mehreren Schaltfingern überlappen. Somit lassen sich durch Verschieben der Schaltkulisse insbesondere verschiedene Kombinationen von Schaltfingern blockieren, um somit unterschiedliche Gänge der Getriebeanordnung, das heißt unterschiedliche Übersetzungen, zu erreichen. Das Blockieren der Schaltfinger kann insbesondere lediglich einseitig oder auch beidseitig erfolgen. Das einseitige Blockieren ist einfach durchzuführen, während das beidseitige Blockieren ein rasches und nahezu Lastunterbrechungsfreies Schalten ermöglicht.

Die Unteransprüche zeigen bevorzugte Weiterbildungen der Erfindung.

Bevorzugt ist vorgesehen, dass zumindest ein Teil der Schaltfinger unterschiedlich lange radiale Ausdehnungen von der Tretkurbelwelle aufweisen. Somit lassen sich durch entsprechend komplementär geformte Blockierelemente gezielt einzelne Schaltfinger blockieren.

Die Blockierelemente sind erfindungsgemäß derart angeordnet, dass eine Verschiebung der Schaltkulisse entlang einer Richtung parallel zu der axialen Richtung der Tretkurbelwelle zu einer aufsteigenden oder absteigenden Änderung eines Übersetzungsverhältnisses der Getriebeanordnung führt. Somit ist lediglich eine Verschiebung der Schaltkulisse von einem ersten äußeren Extrempunkt zu einem zweiten äußeren Extrempunkt notwendig, um von einem niedrigsten Gang in einen höchsten Gang oder umgekehrt zu schalten. In diesem Fall bilden die Blockierelemente auf der Schaltkulisse eine Anordnung analog zu einem Schlüsselbart, sodass bei fortgesetzter Verschiebung der Kulisse in eine Richtung nacheinander alle entsprechend notwendigen Schaltfinger blockiert werden, um ein aufsteigendes oder absteigendes Übersetzungsverhältnis zu erhalten. Dabei ist insbesondere möglich, dass ein Schaltfinger in zwei unterschiedlichen Stellungen der Schaltkulisse blockiert ist, in einer Zwischenstellung zwischen den unterschiedlichen Stellungen jedoch nicht blockiert ist. Somit sind zwei Blockierelemente mit einem Zwischenraum vorhanden, sodass bei fortgesetzter Verschiebung zunächst ein Blockieren des Schaltfingers durch ein Blockierelement stattfindet, dann der Schaltfinger durch den Zwischenraum freigegeben wird und anschließend wieder ein Blockieren des Schaltelements stattfindet.

Eine Rotation der Tretkurbelwelle ist insbesondere auf einen ersten Planetenträger eines ersten Planetengetriebes übertragbar. Besonders vorteilhaft ist zwischen Tretkurbelwelle und erstem Planetenträger ein Freilauf angebracht, sodass die Tretkurbelwelle zumindest in einer Richtung nicht selbstständig von dem ersten Planetengetriebe angetrieben wird. Die Getriebeanordnung umfasst bevorzugt außerdem ein zweites Planetengetriebe, wobei das erste Planetengetriebe und ein zweites Planetengetriebe ein gemeinsames Hohlrad aufweisen. Unter einem gemeinsamen Hohlrad ist insbesondere auch eine solche Anordnung zu verstehen, beider zwei Zahnräder einstückig ausgebildet sind und/oder rotationsfest miteinander verbunden sind. Dabei ist auch vorgesehen, dass das gemeinsame Hohlrad mit je einem Planetenrad des ersten Planetengetriebes und des zweiten Planetengetriebes kämmt, wobei der Durchmesser und/oder die Zähnezahl der beiden Planetenräder identisch ist. Ein zweiter Planetenträger des zweiten Planetengetriebes ist bevorzugt mit einem Sonnenrad eines dritten Planetengetriebes gekoppelt. Das dritte Planetengetriebe weist insbesondere ein gegenüber der Tretkurbelwelle fixiertes Hohlrad auf. Somit ist eine Abstützung des zweiten Planetengetriebes ermöglicht. Der erste Planetenträger ist vorteilhafterweise mit einem Kettenblatt verbunden, über das ein Antriebsdrehmoment auf ein Antriebsrad des Fahrrads übertragbar ist. Somit ist ein Ausgang der Getriebeanordnung definiert. Durch wahlweises Blockieren der Sonnenräder des ersten Planetengetriebes und des zweiten Planetengetriebes lassen sich somit unterschiedliche Übersetzungen realisieren.

Besonders vorteilhaft sind der erste Planetenträger und/oder der Planetenträger jeweils mehrstufig, insbesondere zweistufig, ausgebildet. Jedes Stufe des ersten Planetenträgers und des zweiten Planetenträgers ist vorteilhafterweise mit einem eigenen Sonnenrad mit einem eigenen Schaltfinger zur Drehmomentübertragung gekoppelt. Dabei ist vorgesehen, dass sich die Stufen des jeweiligen Planetenträgers in ihrem Durchmesser und/oder in ihrer Zähnezahl unterscheiden. Durch die Mehrstufigkeit sind somit pro Planetengetriebe mehrere Sonnenräder und damit mehrere Schaltfinger vorhanden, sodass sich eine Vielzahl von möglichen Kombinationen beim Blockieren der Schaltfinger ergibt. Dadurch lässt sich eine große Vielzahl von unterschiedlichen Gängen der Getriebeanordnung realisieren. Besonders vorteilhaft weist zumindest eines derjenigen Sonnräder, die mit einer der Stufen des ersten Planetenträgers oder zweiten Planetenträgers gekoppelt sind, einen Freilauf zu dem zugehörigen Schaltfinger auf. Somit kann der Freilauf vollständig blockiert werden, wobei sich gleichzeitig durch Umkehr der Drehrichtung des zugehörigen Sonnenrads keine Auswirkungen auf die Getriebeanordnung ergeben. Dies ist insbesondere bei der beschriebenen Mehrstufigkeit der Planetenträger vorteilhaft, da hier eine Drehrichtungsumkehr der Sonnenräder auftreten kann. In diesem Fall kann der Schaltfinger des Sonnrades mit Freilauf durch ein Blockierelement vollständig blockiert sein, ohne dass dies eine Auswirkung auf das Sonnenrad hat. Wird die Schaltkulisse weiterverschoben, so kann durch erneute Drehrichtungsumkehr wiederum eine Blockade des Sonnrades stattfinden, was durch den bereits blockierten Schaltfinger sehr zügig und damit nahezu unterbrechungsfrei geschieht.

Besonders vorteilhaft ist außerdem ein Elektroantriebsmotor, insbesondere über ein Reduktionsgetriebe, mit dem zweiten Planetenträger zur Drehmomentübertragung gekoppelt. Somit ermöglicht der Tretlagerantrieb ein Unterstützten eines Fahrers des Fahrzeugs durch ein zusätzliches Antriebsdrehmoment von dem Elektroantriebsmotors. Da der zweite Planetenträger über ein festes Übersetzungsverhältnis an den ersten Planetenträger gekoppelt ist, während der erste Planetenträger unmittelbar an ein Kettenblatt gekoppelt ist, findet somit kein Verändern des Übersetzungsverhältnisses von Elektroantriebsmotor zu Kettenblatt durch das Getriebe statt. Gleichzeitig ist ein kompakter Aufbau des Tretlagerantriebs ermöglicht.

Die Schaltfinger weisen vorteilhafterweise sich parallel zu der axialen Richtung der Tretkurbelwelle erstreckende Öffnungen auf. Somit ist eine Steifigkeit der Schaltfinger gegen Biegung um die Mittelachse der Tretkurbelwelle verringert. Dies erlaubt ein Dämpfen eines Anschlagens der Schaltfinger an den Blockierelementen durch besagte elastische Verformung der Schaltfinger. Somit sind Schwingungen und Geräusche im Betrieb des Tretlagerantriebs minimiert.

Weiterhin ist bevorzugt vorgesehen, dass die Blockierelemente einen sich parallel zu der axialen Richtung der Tretkurbelwelle erstreckenden Schlitz aufweisen. Alternativ oder zusätzlich können die Blockierelemente Federelemente, insbesondere Spiralfedern, Tellerfedern oder Schraubenfedern aufweisen. Wiederum ist ermöglicht, durch elastische Verformung ein Anschlagen der Schaltfinger an den Blockierelementen zu dämpfen. Wiederum wird somit eine Geräuschentwicklung sowie das Auftreten von Vibrationen verhindert oder reduziert.

Die Schaltkulisse kann ein einzelnes Bauteil mit einem Antrieb, insbesondere durch einen Elektromotor, sein. Ebenso kann die Schaltkulisse eine Vielzahl von Bauteileilen mit jeweils einem eigenen Antrieb, insbesondere einem eigenen Elektromotor, umfassen. Weist die Schaltkulisse lediglich ein einzelnes Bauteil auf, so ist ein Aufbau sehr einfach und aufwandsarm ermöglicht. Ebenso ist ein Antrieb der Schaltkulisse einfach und aufwandsarm realisierbar. Bei mehreren Bauteilen mit eigenem Antrieb ist ermöglicht, einzelne Gänge bei Schaltvorgängen zu überspringen und somit ein flexibles Schalten zu ermöglichen.

Der Tretlagerantrieb weist insbesondere ein Gehäuse auf, wobei das Gehäuse eine Aufnahme für die Schaltkulisse umfasst. Das Gehäuse weist an der Aufnahme zumindest einen Längsschlitz auf, der sich parallel zu der axialen Richtung der Tretkurbelwelle erstreckt. Dies führt zu einer Minimierung einer Anregung und Übertragung von Schwingungen durch die Schaltkulisse. Dadurch sind erhöhte Bauteilbelastungen und Geräuschentwicklungen aufgrund von Schwingungen vermieden, welche durch das Anschlagen der Schaltfinger an die Schaltkulisse entstehen können.

Besonders vorteilhaft ist außerdem vorgesehen, dass die Blockierelemente abgerundet sind. Dies verhindert eine hohe Kantenpressung an den Blockierelementen und führt somit zu verringertem Verschleiß und einer erhöhten Lebensdauer der Schaltkulisse. Weiterhin ist besonders vorteilhaft, dass die Zwischenräume zwischen den Blockierelementen derart gewählt sind, dass neben einer Anpassung an die Abmessungen der Schaltfinger die Schaltkulisse bei entsprechender Dynamik seitens eines die Schaltkulisse bewegenden Aktuators eine Verschiebung der Schaltkulisse vollständig abgeschlossen ist, bevor ein nicht blockierter und damit um die Tretkurbelwelle umlaufender, aber zu blockierender, Schaltfinger die Position des Blockierelements erreicht hat. Dazu ist besonders vorteilhaft vorgesehen, dass zumindest ein Sensor vorhanden ist, über den eine Position des jeweiligen Schaltfingers überwacht werden kann.

### Kurze Beschreibung der Zeichnung(en)

Nachfolgend werden Ausführungsbeispiele der Erfindung unter Bezugnahme auf die begleitende Zeichnung im Detail beschrieben. In der Zeichnung ist:
- Figur 1: eine schematische Prinzipskizze eines Tretlagerantriebs gemäß einem Ausführungsbeispiel der Erfindung,
- Figur 2: eine schematische Seitenansicht des Tretlagerantriebs gemäß dem Ausführungsbeispiel der Erfindung,
- Figur 3: eine schematische räumliche Ansicht der Schaltkulisse des Tretlagerantriebs gemäß dem Ausführungsbeispiel der Erfindung,
- Figur 4: eine schematische Seitenansicht der Schaltkulisse des Tretlagerantriebs gemäß dem Ausführungsbeispiel der Erfindung,
- Figur 5: eine schematische Unteransicht der Schaltkulisse des Tretlagerantriebs gemäß dem Ausführungsbeispiel der Erfindung,
- Figur 6: eine schematische Ansicht des Tretlagerantriebs gemäß dem Ausführungsbeispiel der Erfindung bei eingelegtem 1. Gang,
- Figur 7: eine schematische Ansicht des Tretlagerantriebs gemäß dem Ausführungsbeispiel der Erfindung bei eingelegtem 2. Gang,
- Figur 8: eine schematische Ansicht des Tretlagerantriebs gemäß dem Ausführungsbeispiel der Erfindung bei eingelegtem 3. Gang,
- Figur 9: eine schematische Ansicht des Tretlagerantriebs gemäß dem Ausführungsbeispiel der Erfindung bei eingelegtem 4. Gang,
- Figur 10: eine schematische Ansicht des Tretlagerantriebs gemäß dem Ausführungsbeispiel der Erfindung bei eingelegtem 5. Gang,
- Figur 11: eine schematische Ansicht des Tretlagerantriebs gemäß dem Ausführungsbeispiel der Erfindung bei eingelegtem 6. Gang,
- Figur 12: eine schematische Ansicht des Tretlagerantriebs gemäß dem Ausführungsbeispiel der Erfindung bei eingelegtem 7. Gang,
- Figur 13: eine schematische Darstellung von Sensoren des Tretlagerantriebs gemäß dem Ausführungsbeispiel der Erfindung,
- Figur 14: zwei schematische Detailansichten der Schaltfinger des Tretlagerantriebs gemäß dem Ausführungsbeispiel der Erfindung,
- Figur 15: eine schematische Ansicht einer alternativen Schaltkulisse des Tretlagerantriebs gemäß dem Ausführungsbeispiel der Erfindung, und
- Figur 16: eine schematische Ansicht eines Teils eines Gehäuses des Tretlagerantriebs gemäß dem Ausführungsbeispiel der Erfindung.

### Ausführungsform(en) der Erfindung

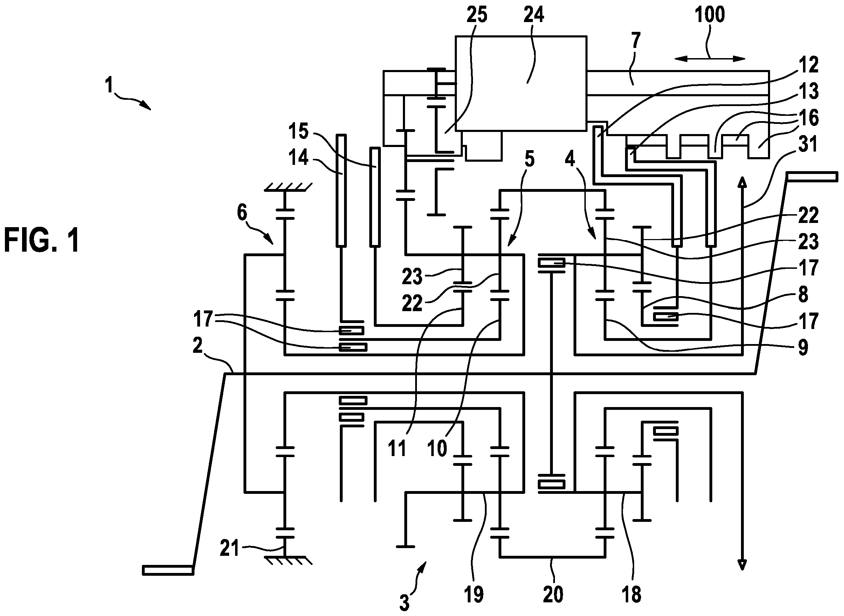

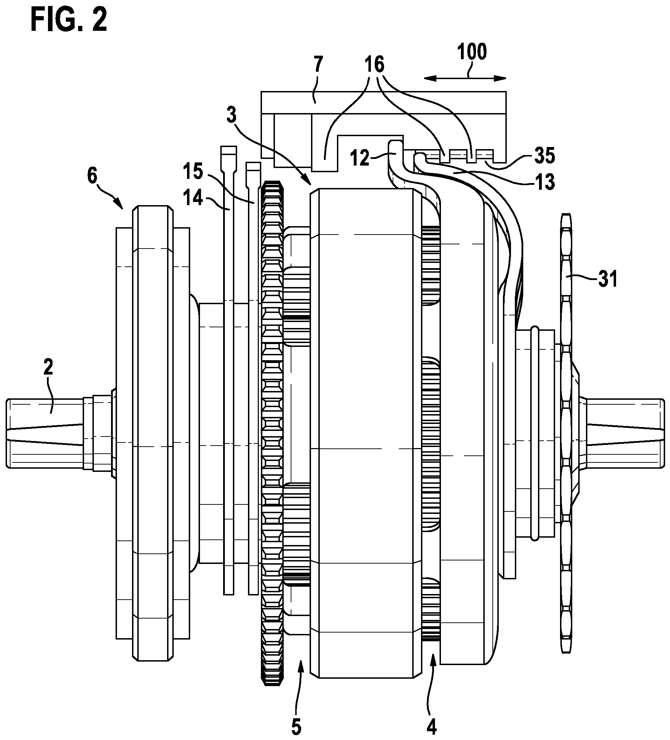

Figur 1 zeigt eine schematische Prinzipskizze des Aufbaus eines Tretlagerantriebs 1 für ein Fahrrad. Figur 2 zeigt eine schematische Seitenansicht des Tretlagerantriebs 1. Der Tretlagerantrieb 1 weist eine integrierte, lastschaltbare 7-Gang-Getriebeanordnung 3 auf.

Der Tretlagerantrieb 1 weist eine Tretkurbelwelle 2 auf, die von einem Fahrer des mit dem Tretlagerantrieb 1 ausgestatteten Fahrrads angetrieben werden kann. Eine Kraftübertragung findet von der Tretkurbelwelle 2 auf die Getriebeanordnung 3 statt, insbesondere über einen Freilauf 17. Die Tretkurbelwelle 2 überträgt ein Drehmoment auf einen ersten Planetenträger 18 eines ersten Planetengetriebes 4. Der erste Planetenträger 18 ist zweistufig ausgebildet und weist somit eine erste Stufe 22 und eine zweite Stufe 23 auf. Dabei kämmt die erste Stufe 22 mit einem ersten Sonnenrad 8, während die zweite Stufe mit einem zweiten Sonnenrad 9 kämmt. Das erste Sonnenrad 8 ist über einen Freilauf 17 mit einem ersten Schaltfinger 12 verbunden, während das zweite Sonnenrad 9 mit einem zweiten Schaltfinger 13 drehfest verbunden ist. Somit kann durch Blockieren des ersten Schaltfingers 12 das erste Sonnenrad 8 in zumindest eine Drehrichtung blockiert werden, während durch Blockade des zweiten Schaltfingers 13 das zweite Sonnenrad 9 blockierbar ist.

Die zweite Stufe 23 des ersten Planetenträgers 18 ist über ein gemeinsames Hohlrad 20 mit einer zweiten Stufe 23 eines zweiten Planetenträgers 19 verbunden, wobei der zweite Planetenträger 19 wiederum eine erste Stufe 22 und zweite Stufe 23 aufweist. Alternativ ist auch eine Verbindung der jeweiligen ersten Stufen 22 über ein gemeinsames Hohlrad 20 möglich. Die erste Stufe 22 des zweiten Planetenträgers 19 kämmt mit einem dritten Sonnenrad 10, während die zweite Stufe 23 des zweiten Planetenträgers 19 mit einem vierten Sonnenrad 11 kämmt. Das dritte Sonnenrad 10 ist über einen Freilauf mit einem dritten Schaltfinger 14 verbunden, während das vierte Sonnenrad 11 drehfest mit einem vierten Schaltfinger 15 verbunden ist. Somit ist analog zu dem ersten Sonnenrad 8 und dem zweiten Sonnenrad 9 durch Blockade von drittem Schaltfinger 14 oder viertem Schaltfinger 15 ein Blockieren des dritten Sonnenrads 10 in zumindest eine Richtung oder ein vollständiges Blockieren des vierten Sonnenrads 11 ermöglicht.

Der zweite Planetenträger 19 ist außerdem über ein Reduktionsgetriebe 17 mit einem Elektroantriebsmotor 24 gekoppelt, über den eine zusätzliche Antriebskraft in die Getriebeanordnung 3 einbringbar ist. Außerdem ist der zweite Planetenträger 19 mit einem dritten Planentengetriebe 6 gekoppelt, dessen Hohlrad 21 fixiert ist und somit nicht rotieren kann. Der erste Planetenträger 18 ist mit einem Kettenblatt 31 gekoppelt, was einen Ausgang der Getriebeanordnung 3 darstellt.

Eine Antriebskraft auf das Kettenblatt 31 kann sowohl durch den Elektroantriebsmotor 24 als auch über die Tretkurbelwelle 2 und damit über die Muskelkraft des Fahrers erzeugt werden. Wie aus Figur 1 ersichtlich ist ein Übersetzungsverhältnis zwischen Elektroantriebsmotor 24 und Kettenblatt 31 fest und kann nicht verändert werden. Bei dem Übertragungsweg zwischen Tretkurbelwelle 2 und Kettenblatt 31 sind hingegen eine Vielzahl von Freiheitsgraden innerhalb der Getriebeanordnung vorhanden, wobei durch die Schaltfinger 12, 13, 14, 15 einzelne Freiheitsgrade blockiert werden können. Dadurch ist das Übersetzungsverhältnis zwischen Tretkurbelwelle 2 und Kettenblatt 31 variabel einstellbar.

Das Verändern des Übersetzungsverhältnisses erfolgt mittels einer Schaltkulisse 7. Die Schaltkulisse 7 ist bezüglich der Getriebeanordnung 3 drehfest angeordnet und lässt sich in axialer Richtung 100 der Tretkurbelwelle 2 verschieben. Durch ein derartiges Verschieben sind einzelne oder mehrere Schaltfinger 12, 13, 14, 15 blockierbar, sodass diese Schaltfinger 12, 13, 14, 15 nicht mehr rotieren können. Dies führt zu einem Blockieren des zugehörigen Sonnenrads 8, 9, 10, 11, wenn das Sonnenrad 8, 9, 10, 11 nicht durch einen Freilauf freigegeben ist.

Die Schaltfinger 12, 13, 14, 15 sind Hervorhebungen, die sich in radialer Richtung der Tretkurbelwelle 2 erstecken. Die Schaltkulisse 7 weist Blockierelement 16 auf, die sich ebenfalls in radialer Richtung der Tretkurbelwelle 2 erstrecken. Die Blockierelemente 16 und die Schaltfinger 12, 13, 14, 15 überlappen in radialer Richtung der Tretkurbelwelle 2, sodass durch Verschiebung der Schaltkulisse 7 in axialer Richtung einzelne oder mehrere Schaltfinger 12, 13, 14, 15 in ihrer Rotation blockiert werden können, indem die Schaltfinger 12, 13, 14, 15 an den Blockierelementen 16 zur Anlage gelangen.

Das Ändern der Übersetzung zwischen Kettenblatt 31 und Tretkurbelwelle 2 wird im Folgenden auch als Schalten zwischen mehreren Gängen beschrieben. Dabei ist für jeden Schaltvorgang lediglich die Schaltkulisse 7 zu verschieben. Insbesondere ist ein Aktuator vorhanden, der zum Verschieben der Schaltkulisse 7 ausgebildet ist. Der Aktuator ist insbesondere ein Elektromotor.

Über das Kettenblatt 31 ist die Antriebskraft insbesondere über einen Kettentrieb an ein Rad, beispielsweise ein Hinterrad, des Fahrrads übertragbar. Beim Betrieb des Fahrrads wird somit ein Benutzer durch den Elektroantriebsmotor unterstützt, während er selbst einen gewünschten Gang beim Antrieb des Fahrrads mit seiner Muskelkraft wählen kann.

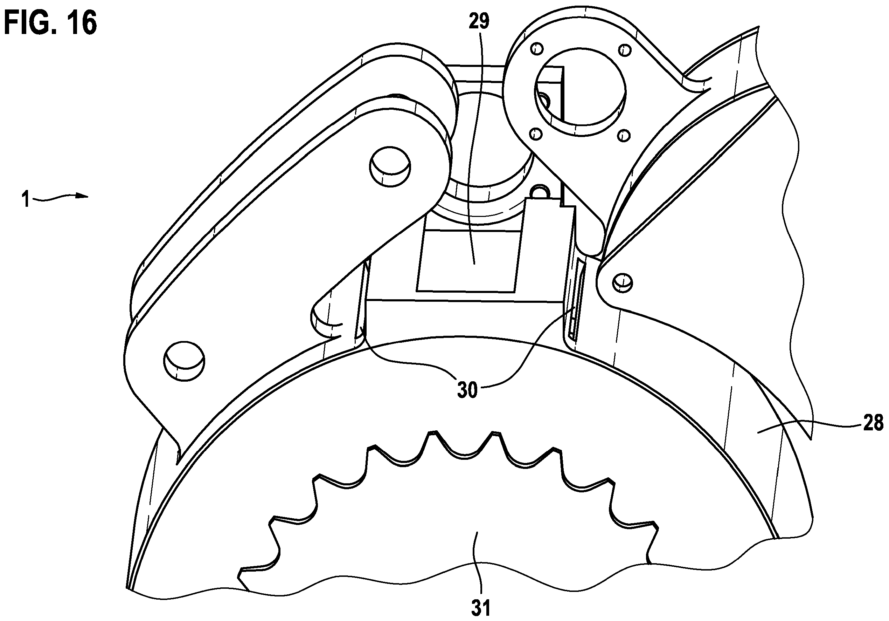

Der Tretlagerantrieb 1 weist außerdem ein Gehäuse 28 (vgl. Figur 16) auf, an dem die Schaltkulisse 7 gelagert ist und das die Getriebeanordnung 3 räumlich zumindest teilweise umschließt.

Durch die an den Sonnenrädern8, 9, 10, 11 drehfest angebrachten Schaltfinger12, 13, 14, 15, welche mit den Sonnenrädern 8, 9, 10, 11 umlaufen, können die Sonnenräder 8, 9, 10, 11 einzeln oder in Kombination mittels der Schaltkulisse 7 in ihrer Drehbewegung blockiert bzw. drehfest mit dem Gehäuse 28 verbunden und wieder freigegeben werden. Durch das Blockieren und Freigeben der Sonnenräder 8, 9, 10, 11 werden die verschiedenen Übersetzungen bzw. Gänge der Getriebeanordnung eingestellt bzw. geschaltet.

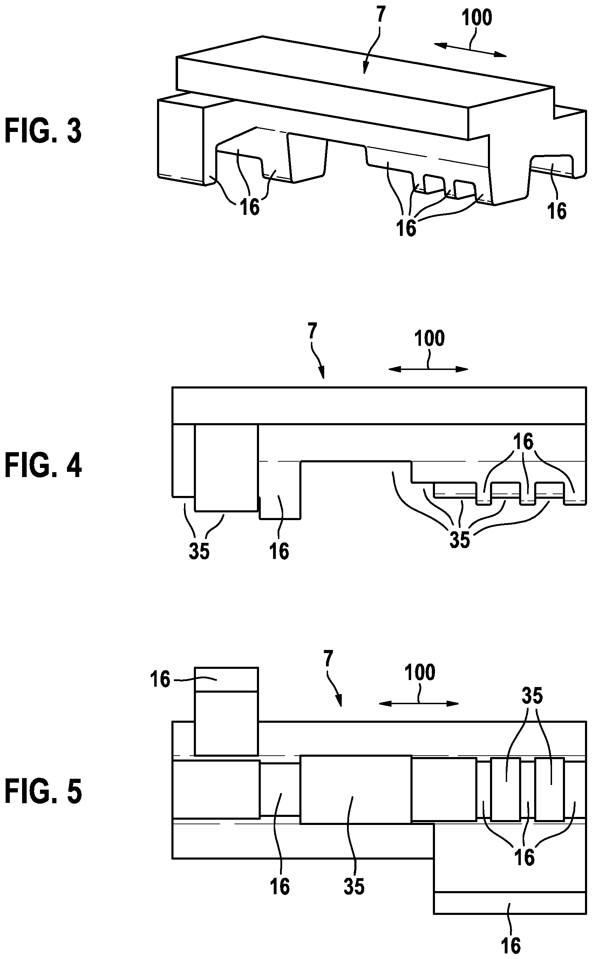

In den Figuren 3 bis 5 sind verschiedenen Ansichten der Schaltkulisse 7 dargestellt. Dabei zeigt Figur 3 eine schematische räumliche Repräsentation, Figur 4 eine Seitenansicht und Figur 5 eine Unteransicht. Die Schaltkulisse 7 weist mehrere Blockierelemente 16 und Zwischenräume 35 unterschiedlicher Breite und Höhe auf. Die Schaltkulisse 7 ist parallel und in Richtung der Tretkurbelwelle 2 verschiebbar. Mittels der Blockierelemente 16 und der Zwischenräume 35 können durch Verschieben der Schaltkulisse 7 die umlaufenden Schaltfinger 12, 13, 14, 15 und damit die zugehörigen Sonnenräder 8, 9, 10, 11 einzeln oder kombiniert in einer oder in beiden Drehrichtungen blockiert werden. Dabei sind die Blockierelemente 16 und Zwischenräume 35 der Schaltkulisse 7 derart dimensioniert und angeordnet, dass die Gänge allein durch Verschieben der Schaltkulisse 7 entlang der axialen Richtung 100 der Tretkurbelwelle 2 immer in ihrer Reihenfolge nacheinander in beide Richtungen, d.h. beim Hoch- und Runterschalten, ohne ein Überspringen von Gängen durchgeschaltet werden können. Die Position, Abstände und Dimensionierung der Blockierelemente 16 und Zwischenräume 35 sowie der Schaltfinger 12, 13, 14, 15 sind so gewählt, dass gemäß Schaltlogik bzw. Übersetzungsschemata und erforderlicher Schaltgeschwindigkeit die gerade an einer bestimmten Übersetzung beteiligten Schaltfinger 12, 13, 14, 15 bzw. die zugehörigen Sonnenräder 8, 9, 10, 11 blockiert oder freigegeben werden, wenn die Schaltkulisse 7 axial verschoben wird.

Kanten der Blockierelemente 16 sind bevorzugt abgerundet, um Kantenträger zu minimieren. Für eine Blockade von Schaltfingern 12, 13, 14, 15 in beiden Drehrichtungen zur Vermeidung eines Leerwegs der Tretkurbelwelle 2 ohne Leistungsübertragung sind Blockierelemente 16 derart angeordnet, dass die betreffenden Schaltfinger 12, 13, 14, 15 umfasst und somit in beide Drehrichtungen blockiert werden können.

In Figur 1 ist gezeigt, dass der erste Schaltfinger 12 und der dritte Schaltfinger 14 jeweils über einen Freilauf 17, insbesondere über einen selbstschaltenden Überholfreilauf, mit dem zugehörigen ersten Sonnenrad 8 und dritten Sonnenrad 10 verbunden sind. Damit ist es möglich, nach einer Blockade dieser Schaltfinger 12, 14 durch die Schaltkulisse 7, bei einem Gangwechsel ein Wegdrehen dieser Schaltfinger 12, 14 von der Schaltkulisse 7 zu verhindern. Der erste Schaltfinger 12 oder der dritte Schaltfinger 14 können mittels der Schaltkulisse 7 in der Blockadeposition gehalten werden, während gleichzeitig das erste Sonnenrad 8 oder das dritte Sonnenrad 10 für einen Gangwechsel wieder freigegeben werden. Dies geschieht, indem bei einem Gangwechsel das erste Sonnenrad 8 oder dritte Sonnenrad 10 eine Drehrichtungsumkehr erfährt und dabei gleichzeitig der jeweilige Freilauf 17 den erste Schaltfinger 12 oder dritten Schaltfinger 14 von dem zugehörigen ersten Sonnenrad 8 oder dritten Sonnenrad 10 entkoppelt.

Durch das Verhindern des Wegdrehens des ersten Schaltfinger 12 und dritten Schaltfingers 14 von der Schaltkulisse 7 wird bei erneuter Blockade des ersten Schaltfingers 12 oder dritten Schaltfingers 14 ein Leerweg der Tretkurbelwelle ohne Leistungsübertragung durch die Umlaufzeit des ersten Schaltfingers 12 oder zweiten Schaltfingers 14 bis zur Position der Schaltkulisse 7 vermieden. Damit ist sichergestellt, dass für keinen der Gangwechsel ein Leerweg der Tretkurbelwelle 2 ohne Leistungsübertragung entsteht. Es findet bei jedem Gangwechsel eine Leistungsübertragung vom Fahrer auf das Kettenblatt 31 und damit zugkraftunterbrechungsfrei statt.

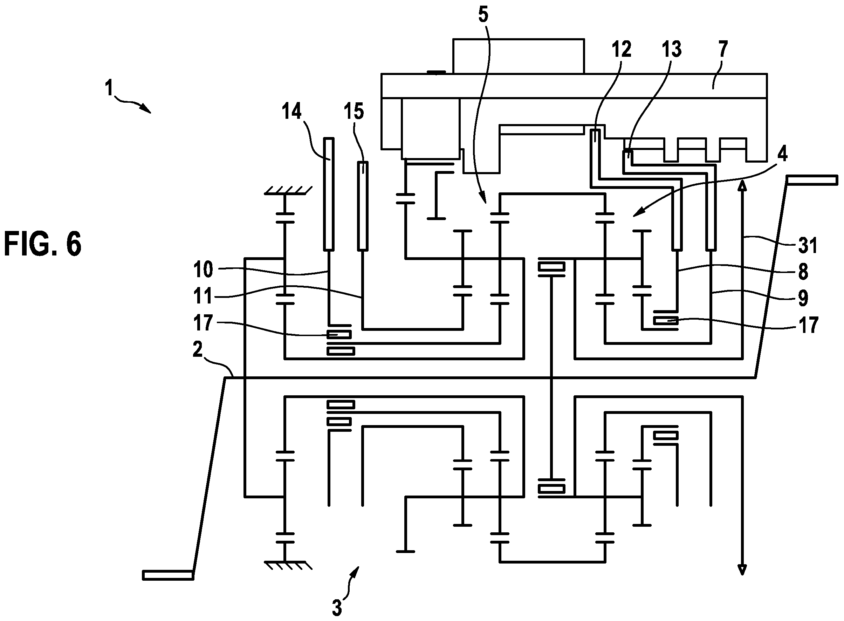

Die Figuren 6 bis 12 zeigen das Verschieben der Schaltkulisse 7 und der damit verbundenen Blockade von einzelnen Schaltfingern 12, 13, 14, 15 für das Einstellen der sieben Gänge. Somit ist zwischen einem kleinsten ersten Gang und einem größten siebten Gang beliebig schaltbar, wobei stets alle Zwischengänge in aufsteigender oder absteigender Reihenfolge durchschaltet werden müssen. Dabei erfolgt bis auf den Wechsel in den ersten Gang und umgekehrt vom ersten Gang in den zweiten Gang bei jedem Schaltvorgang ein Wechsel in der Blockade zwischen dem ersten Sonnenrad 8 und dem zweiten Sonnenrad 9 des ersten Schaltfingers 12 und zweiten Schaltfingers 13. Der erste Gang stellt eine höchste Übersetzung der Getriebeanordnung 3 dar, während der siebte Gang eine geringste Übersetzung darstellt.

Figur 6 zeigt einen eingelegten ersten Gang. Die Schaltkulisse 7 befindet sich in kürzester Distanz zum Kettenblatt 31 und alle vier Schaltfinger 12, 13, 14, 15 sind freigegeben und können mit den zugehörigen Sonnenrädern 8, 9, 10, 11 umlaufen.

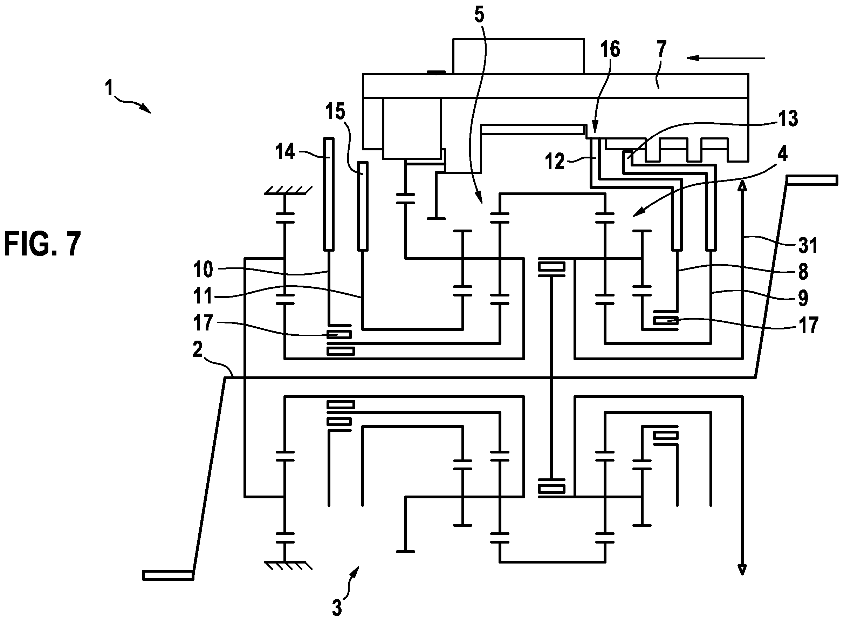

Figur 7 zeigt einen eingelegten zweiten Gang. Dazu erfolgt ein Verschieben der Schaltkulisse 7 mit Vergrößerung der Distanz zum Kettenblatt 31 und Blockade des ersten Schaltfingers 12 durch ein Blockierelement 16 der Schaltkulisse 7. Das erste Sonnenrad 8 ist dadurch blockiert und kann nicht umlaufen.

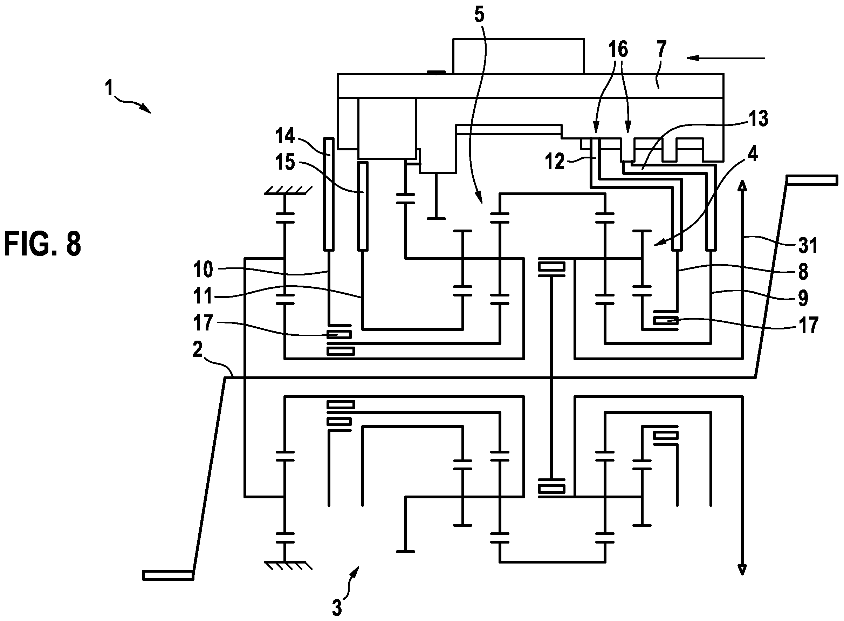

Ein weiteres Verschieben der Schaltkulisse 7 mit Vergrößerung der Distanz zum Kettenblatt 31 führt zu einem dritten Gang, der in Figur 8 gezeigt ist. Dabei erfolgt eine Blockade des zweiten Schaltfingers 13 durch ein Blockierelement 16 der Schaltkulisse 7, sodass das zugehörige zweite Sonnenrad 9 ebenfalls blockiert ist. Der erste Schaltfinger 12 wird durch zwei Blockierelemente 16 umfasst und ist daher in beide Drehrichtungen blockiert. Das erste Sonnenrad 8 hingegen erfährt eine Drehrichtungsumkehr und wird über einen Freilauf 17 freigegeben. Somit kann das erste Sonnenrad 8 trotz vollständig blockiertem ersten Schaltfinger 12 rotieren.

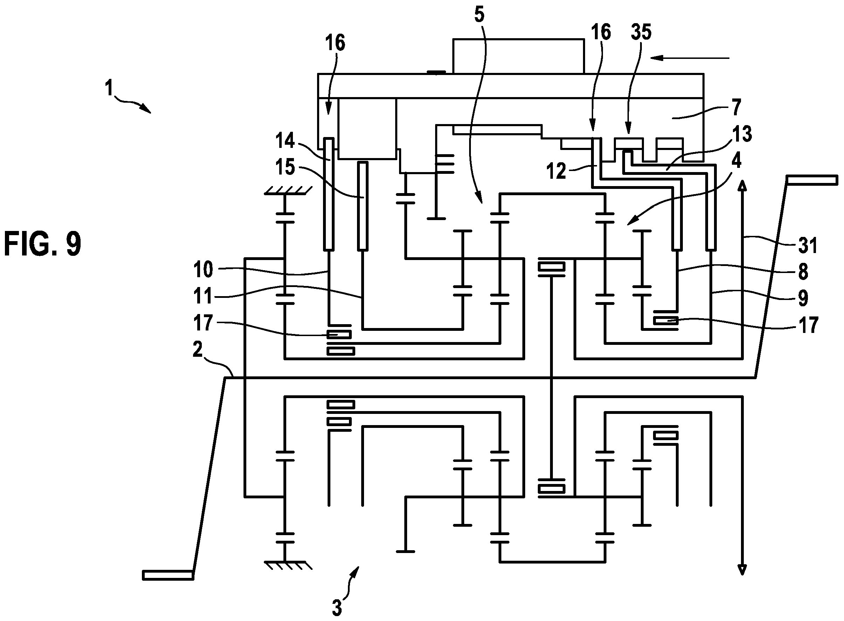

In einem in Figur 9 gezeigten vierten Gang ist die Schaltkulisse 7 weiter mit Vergrößerung der Distanz zum Kettenblatt 31 verschoben. Somit erfolgt eine Blockade des Schaltfingers dritten Schaltfingers 14 durch ein Blockierelement 16 der Schaltkulisse 7 und damit eine Blockade des dritten Sonnenrads 10. Gleichzeitig wird der zweite Schaltfinger 13 und damit das zugehörige zweite Sonnenrad 9 freigegeben. Sowohl das zweite Sonnenrad 9 als auch der zweite Schaltfinger 13 können somit frei rotieren. Der erste Schaltfinger 12 wird weiterhin durch zwei Blockierelemente 16 der Schaltkulisse 7 umfasst und bleibt blockiert. Das erste Sonnenrad 8 hingegen erfährt eine Drehrichtungsumkehr und wird so durch die weitere Blockade des ersten Schaltfingers 12 blockiert, da der Freilauf 17 durch die Drehrichtungsumkehr keine Rotation des ersten Sonnenrads 8 mehr erlaubt.

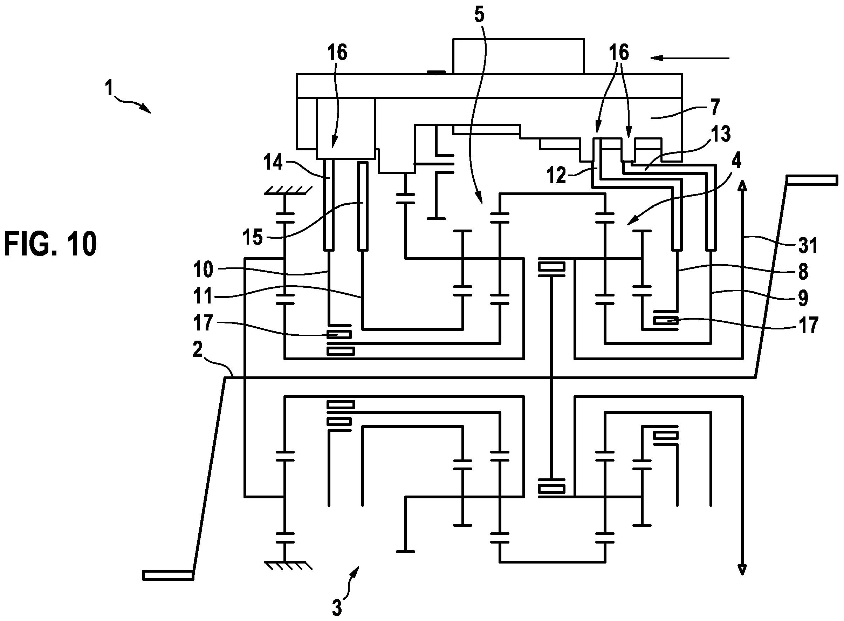

Figur 10 zeigt einen fünften Gang, der durch weiteres Verschieben der Schaltkulisse 7 mit Vergrößerung der Distanz zum Kettenblatt 31 erreicht wird. Es erfolgt eine Blockade des zweiten Schaltfingers 13, während der erste Schaltfinger 12 weiterhin durch zwei Blockierelemente umfasst wird und bleibt blockiert bleibt. Allerdings erfolgt eine Freigabe des ersten Sonnenrads 8 wie beim dritten Gang über eine Drehrichtungsumkehr und den Freilauf 17. Somit ist das zweite Sonnenrad 9 blockiert, während das erste Sonnenrad freigegeben ist. Bei dem dritten Sonnenrad 10 und dem vierten Sonnenrad 11 erfolgt keine Änderung, sodass das dritte Sonnenrad 10 blockier und das vierte Sonnenrad 11 freigegeben ist.

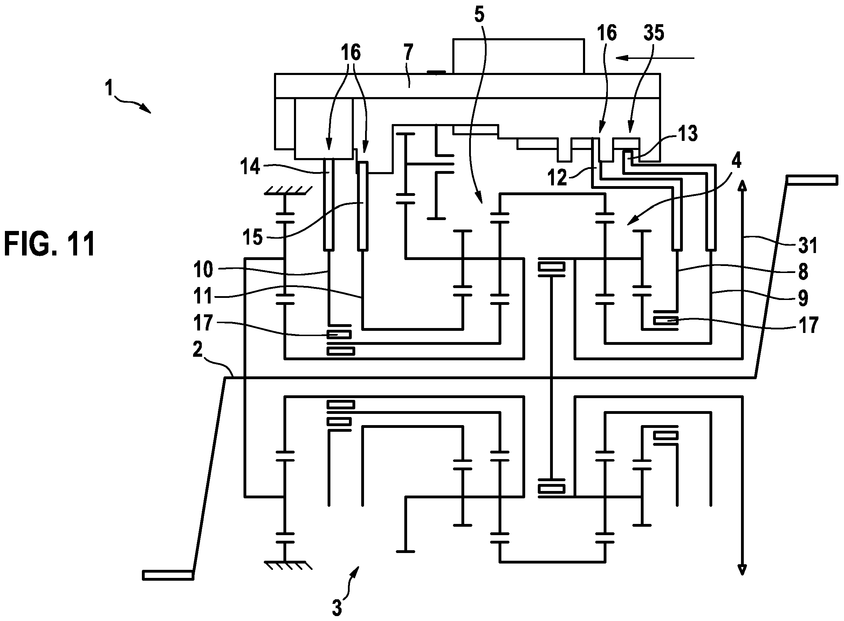

Ein sechster Gang ist in Figur 11 gezeigt. Durch weiteres Verschieben der Schaltkulisse 7 mit Vergrößerung der Distanz zum Kettenblatt 31 erfolgt eine Blockade des vierten Schaltfingers 15 durch ein Blockierelement 16 der Schaltkulisse 7 und damit eine Blockade des zugehörigen vierten Sonnenrads 11. Der dritte Schaltfinger 14 wird durch zwei Blockierelemente 16 umfasst und bleibt blockiert, wobei eine Rotation des dritten Schaltfingers 14 gänzlich verhindert ist. Das dritte Sonnenrad 10 hingegen erfährt eine Drehrichtungsumkehr und wird über einen Freilauf 17 freigegeben. Gleichzeitig werden der zweite Schaltfinger 13 und das zugehörige zweite Sonnenrad 9 freigegeben. Der erste Schaltfinger 12 wird weiterhin durch zwei Blockierelemente 16 umfasst und bleibt blockiert. Die Blockade des zugehörigen ersten Sonnenrads 8 erfolgt wie beim vierten Gang über eine Drehrichtungsumkehr, sodass der Freilauf 17 das erste Sonnenrad 8 nicht mehr freigeben kann.

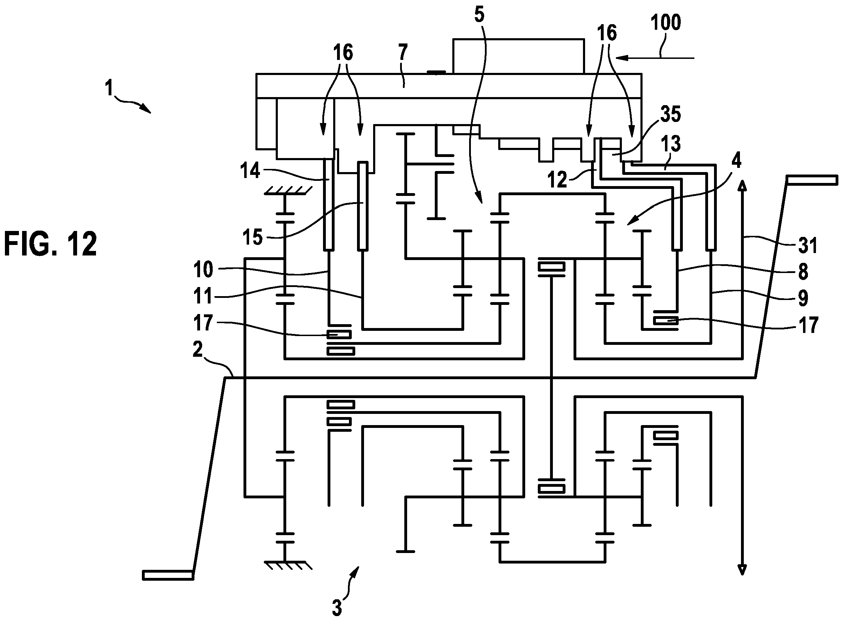

Schließlich ist in Figur 12 ein siebter Gang gezeigt, der durch weiteres Verschieben der Schaltkulisse mit Vergrößerung der Distanz zum Kettenblatt 31 erreicht wird. Dadurch wird der zweite Schaltfinger 13 durch ein Blockierelement 16 der Schaltkulisse 7 blockiert, was zu einer Blockade des zugehörigen zweiten Sonnenrad 9 führt. Die Schaltkulisse 7 befindet sich in größter Distanz zum Kettenblatt 31. Alle vier Schaltfinger 12, 13, 14, 15 sind in dieser Stellung blockiert. Der erste Schaltfinger 12 wird weiterhin durch zwei Blockierelemente 16 umfasst und bleibt blockiert. Die Freigabe des zugehörigen ersten Sonnenrads erfolgt wie beim dritten Gang über eine Drehrichtungsumkehr und den Freilauf 17.

Durch die Blockade verschiedener Sonnenräder 8, 9, 10, 11 erfolgt eine Drehmomentübertragung auf unterschiedlichen Wegen durch die Getriebeanordnung 3. Dabei werden unterschiedliche Übersetzungen realisiert. Dies führt dazu, dass unterschiedliche Gänge geschaltet werden können.

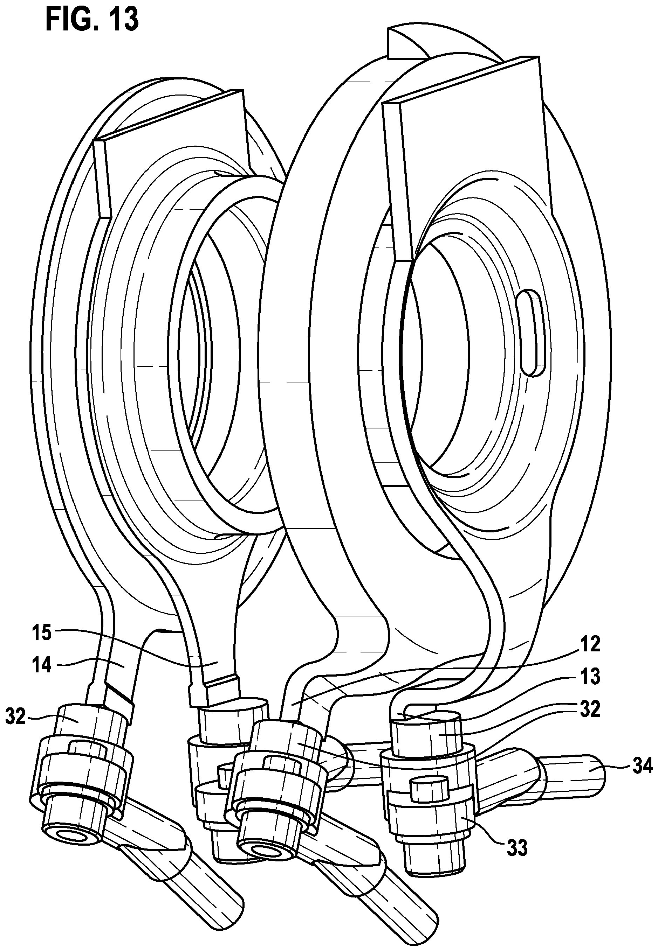

Die Abstände zwischen den Blockierelementen 16 in axialer Richtung 100 bzw. die Länge der Zwischenräume 35 sowie die Breite der Blockierelemente 16 in axialer Richtung 100 sind neben einer Anpassung an eine Dimensionierung der Enden der Schaltfinger 12, 13, 14, 15 so gewählt, dass die Schaltkulisse 7 bei entsprechender Dynamik des Aktuators für die Verschiebung der Schaltkulisse 7 ihre erneute Position vollständig eingenommen hat, bevor der zu blockierende und noch umlaufende Schaltfinger 12, 13, 14, 15 die Position der Schaltkulisse 7, respektive des Blockierelements 16 erreicht hat. Um im Weiteren die rechtzeitige Positionierung der Schaltkulisse 7 sicherzustellen, wird zudem die Drehposition der Schaltfinger 12, 13, 14 15 beim Umlaufen mittels eines Sensors 32 erfasst. Dies ist in Figur 13 gezeigt. Dabei ist vorgesehen, dass jeweils ein Sensor 32 zur Überwachung eines der Schaltfingers 12, 13, 14, 15 vorgesehen ist, wobei jeder Sensor eine eigene Aufnahme 33 und ein eigenes Datenkabel 34 zur Datenübertragung an ein Steuergerät aufweist. Damit wird der Zeitpunkt der Verschiebung der Schaltkulisse gesteuert.

In einer alternativen Ausführung kann die Schaltkulisse 7 in axialer Richtung 100 auch in zwei oder bis zu vier nicht mechanisch zusammenhängenden Teilen dargestellt werden. Dies hat den Vorteil, dass die Teilstücke mit jeweils einem eigenen Aktuator versehen auch unabhängig voneinander bewegt werden können und damit beim Gangwechsel Gänge übersprungen werden können.

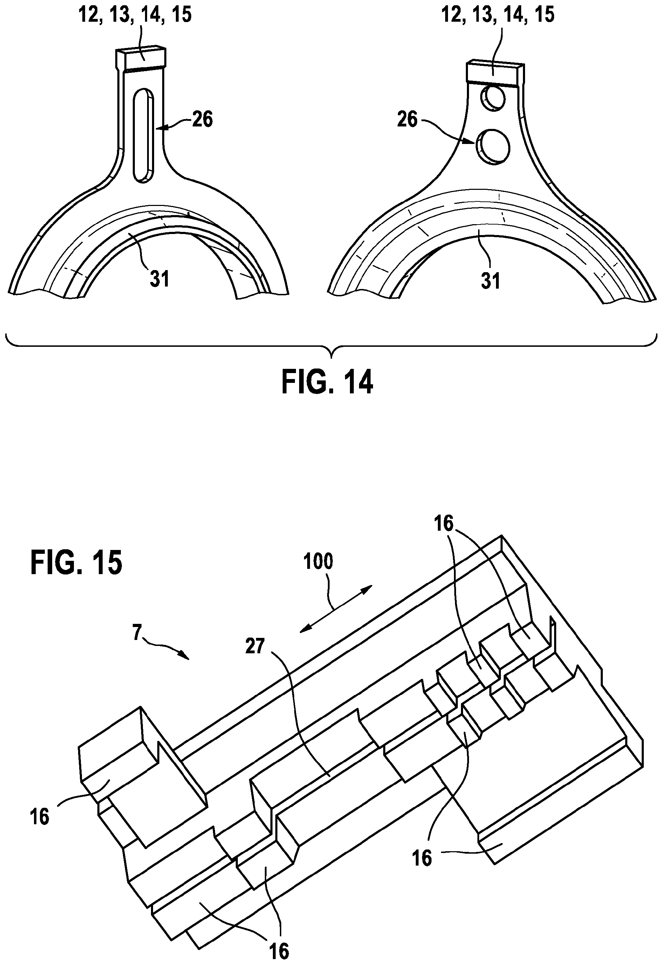

In einer bevorzugten Ausführung können die Schaltfinger 12, 13, 14, 15 in ihrem Mittelteil mit bestimmten Aussparungen 26 versehen werden. Figur 14 zeigt beispielhaft zwei mögliche Varianten. Eine erste Variante ist ein Langloch, während eine zweite Variante eine Vielzahl von einzelnen Löchern, insbesondere Rundlöchern, mit bevorzugt unterschiedlichem Radius, aufweist. Hierdurch wird die Struktur des Schaltfingers 12, 13, 14, 15 elastischer. Die elastische Struktur kann damit den durch die Blockade eines Schaltfingers 12, 13, 14, 15, respektive Sonnenrads 8, 9, 10, 11, hervorgerufenen Schaltschlag und/oder Schaltstoß ohne plastische Materialverformung aufnehmen und dämpfen. Es können so die Anregungen von Vibrationen und Geräusch minimiert werden. In einer alternativen Ausführung können die Aussparungen 26 der Schaltfinger 8, 9, 10, 11 zusätzlich mit Federn, z.B. Spiral-, Teller- oder Schraubenfedern, ausgestattet werden und/oder der Schaltfinger 12, 13, 14, 15 in seinem Mittelteil durch eine solche Feder ersetzt werden.

Abb. 15 zeigt in einer bevorzugten Weiterbildung der Schaltkulisse 7, welche einen Spalt 27 in axialer Richtung 100 bzw. parallel zur Drehachse der Schaltfinger 12, 13, 14, 15 zur Steigerung der Elastizität der Struktur der Schaltkulisse 7 aufweist. Hierdurch wird ebenfalls und als eine weitere Maßnahme erreicht, dass der durch die Blockade eines Schaltfingers 12, 13, 14, 15, respektive Sonnenrads 8, 9, 10, 11, hervorgerufene Schaltschlag und/oder Schaltstoß ohne plastische Materialverformung aufgenommen und gedämpft werden kann. Alternativ kann der Spalt mit dämpfendem Material, beispielsweise einem Elastomer, gefüllt sein, um die federnde und dämpfende Wirkung noch weiter zu steigern. Weiter kann die Elastizität zur Aufnahme und Dämpfung des Schaltschlags und/oder Schaltstoßes gesteigert werden, indem die Schaltkulisse 7 im Gehäuse 28 elastisch aufgehängt ist.

Figur 16 zeigt eine weitere Maßnahme zur Minimierung einer Anregung bzw. Übertragung von Schwingungen, welche zu erhöhten Bauteilbelastungen und Geräusch führen können. Dazu sind Spaltöffnungen 30 im Gehäuse 28 des Tretlagerantriebs 1 an einer Aufnahme 29 der Schaltkulisse 7 am Gehäuse 28 angebracht. Die Spaltöffnungen 30 im Gehäuse 28 verhindern bzw. unterbrechen eine Weiterleitung von Schwingungen, welche durch den Schaltschlag und/oder Schaltstoß bei Blockade eines Schaltfingers 12, 13, 14, 15, respektive Sonnenrads 8, 9, 10, 11, hervorgerufen werden können.

## Patentansprüche

1. Tretlagerantrieb (1) eines Fahrrads, umfassend
• eine Tretkurbelwelle (2), die zum Bedienen durch einen Fahrer vorgesehen ist,
• eine Getriebeanordnung (3), die auf der Tretkurbelwelle (2) angeordnet ist und eine Vielzahl von untereinander verbundenen Planetengetrieben (4, 5) umfasst,
• eine gegenüber der Tretkurbelwelle (2) rotationsfest angeordnete Schaltkulisse (7), die entlang einer axialen Richtung (100) der Tretkurbelwelle (2) verschiebbar ist,
wobei die Schaltkulisse (7) Blockierelemente (16) aufweist,
**dadurch gekennzeichnet, dass** die Sonnenräder (8, 9, 10, 11) der Planetengetriebe (4, 5) jeweils einen Schaltfinger (12, 13, 14, 15) aufweisen, der sich bezüglich der Tretkurbelwelle (7) radial nach außen erstreckt, und
• wobei die Blockierelemente (16) in radialer Richtung der Tretkurbelwelle (2) mit zumindest einem Schaltfinger (8, 9, 10, 11) überlappen, sodass durch Verschiebung der Schaltkulisse (7) durch Überlappung von Schaltfingern (8, 9, 10, 11) und Blockierelementen (16) sowohl in axialer als auch in radialer Richtung der Tretkurbelwelle (7) eine Rotation einzelner oder mehrerer Schaltfinger (8, 9, 10, 11) um die Tretkurbelwelle (2) verhindert ist, wobei die Blockierelemente (16) derart angeordnet sind, dass eine fortgesetzte Verschiebung der Schaltkulisse (7) entlang einer Richtung parallel zu der axialen Richtung der Tretkurbelwelle (2) nacheinander alle entsprechend notwendigen Schaltfinger blockiert und zu einer aufsteigenden oder absteigenden Änderung eines Übersetzungsverhältnisses der Getriebeanordnung (3) führt.

2. Tretlagerantrieb (1) nach Anspruch 1, **dadurch gekennzeichnet, dass** zumindest ein Teil der Schaltfinger (8, 9, 10, 11) unterschiedlich lange radiale Ausdehnungen von der Tretkurbelwelle (2) aufweist.

3. Tretlagerantrieb (1) nach einem der vorhergehenden Ansprüche, **dadurch gekennzeichnet, dass** eine Rotation der Tretkurbelwelle (2), insbesondere über einen Freilauf (17), auf einen ersten Planetenträger (18) eines ersten Planetengetriebes (4) übertragbar ist,
• wobei das erste Planetengetriebe (4) und ein zweites Planetengetriebe (5) ein gemeinsames Hohlrad (20) aufweisen, und
• wobei ein zweiter Planetenträger (19) des zweiten Planetengetriebes (5) mit einem Sonnenrad eines dritten Planetengetriebes (6) gekoppelt ist, wobei das dritte Planetengetriebe (6) ein gegenüber der Tretkurbelwelle (2) fixiertes Hohlrad (21) aufweist.

4. Tretlagerantrieb (1) nach Anspruch 3, **dadurch gekennzeichnet, dass** der erste Planetenträger (18) und/oder der zweite Planetenträger (19) jeweils mehrstufig, insbesondere zweistufig, ausgebildet sind, wobei jede Stufe (22, 23) mit einem eigenen Sonnenrad (8, 9, 10, 11) zur Drehmomentübertragung gekoppelt ist, und wobei insbesondere zumindest eines derjenigen Sonnräder (8, 9, 10, 11), die mit einer der Stufen (22, 23) des ersten Planetenträgers (18) oder zweiten Planetenträgers (19) gekoppelt sind, einen Freilauf (17) zu dem zugehörigen Schaltfinger (12, 13, 14, 15) aufweisen.

5. Tretlagerantrieb (1) nach Anspruch 3 oder 4, **dadurch gekennzeichnet, dass** ein Elektroantriebsmotor (24), insbesondere über ein Reduktionsgetriebe (25), mit dem zweiten Planetenträger (19) zur Drehmomentübertragung gekoppelt ist.

6. Tretlagerantrieb (1) nach einem der vorhergehenden Ansprüche, **dadurch gekennzeichnet, dass** die Schaltfinger (12, 13, 14, 15) sich parallel zu der axialen Richtung der Tretkurbelwelle (2) erstreckende Öffnungen (26) aufweisen, um ein Anschlagen der Schaltfinger (12, 13, 14, 15) an den Blockierelementen (16) durch elastische Verformung der Schaltfinger (12, 13, 14, 15) zu dämpfen.

7. Tretlagerantrieb (1) nach einem der vorhergehenden Ansprüche, **dadurch gekennzeichnet, dass** die Blockierelemente (16) einen parallel zu der axialen Richtung der Tretkurbelwelle (2) ausgerichteten Schlitz (27) und/oder Federelemente aufweisen, um ein Anschlagen der Schaltfinger (12, 13, 14, 15) an den Blockierelementen (16) zu dämpfen.

8. Tretlagerantrieb (1) nach einem der vorhergehenden Ansprüche, **dadurch gekennzeichnet, dass** die Schaltkulisse (7) ein einzelnes Bauteil mit einem Antrieb, insbesondere durch einen Elektromotor, oder eine Vielzahl von Bauteilen mit jeweils einem eigenen Antrieb, insbesondere einem eigenen Elektromotor, ist.

9. Tretlagerantrieb (1) nach einem der vorhergehenden Ansprüche,
**gekennzeichnet durch** ein Gehäuse (28), wobei das Gehäuse (28) eine Aufnahme (29) für die Schaltkulisse (7) aufweist, und wobei das Gehäuse (28) an der Aufnahme (29) zumindest einen Längsschlitz (30) aufweist, der parallel zu der axialen Richtung der Tretkurbelwelle (2) ausgerichtet ist.

## Claims

1. Bottom bracket drive (1) of a bicycle, comprising
- a foot pedal crankshaft (2) which is provided for operation by a driver;
- a gearbox assembly (3) which is disposed on the foot pedal crankshaft (2) and comprises a multiplicity of interconnected planetary gearboxes (4, 5);
- a shifting gate (7) which is disposed in a rotationally fixed manner in relation to the foot pedal crankshaft (2) and is displaceable along an axial direction (100) of the foot pedal crankshaft (2); wherein the shifting gate (7) has blocking elements (16), **characterized in that**
sun gears (8, 9, 10, 11) of the planetary gearboxes (4, 5) have in each case one shifting finger (12, 13, 14, 15) which in terms of the foot pedal crankshaft (7) extends radially outward; and
- wherein the blocking elements (16) in the radial direction of the foot pedal crankshaft (2) overlap at least one shifting finger (8, 9, 10, 11) such that, by displacing the shifting gate (7), any rotation of individual or a plurality of shifting fingers (8, 9, 10, 11) about the foot pedal crankshaft (2) in the axial direction as well as in the radial direction of the foot pedal crankshaft (7) is prevented by an overlap of the shifting fingers (8, 9, 10, 11) and the blocking elements (16), wherein the blocking elements (16) are disposed in such a manner that a continuation of the displacement of the shifting gate (7) along a direction parallel to the axial direction of the foot pedal crankshaft (2) successively blocks all correspondingly required shifting fingers and leads to a transmission ratio of the gear assembly (3) being varied so as to increase or decrease.

2. Bottom bracket drive (1) according to Claim 1, **characterized in that** at least part of the shifting fingers (8, 9, 10, 11) have dissimilar radial extents from the foot pedal crankshaft (2).

3. Bottom bracket drive (1) according to one of the preceding claims, **characterized in that** a rotation of the foot pedal crankshaft (2), is able to be transmitted to a first planet carrier (18) of a first planetary gearbox (4), in particular by way of freewheel assembly (17),
- wherein the first planetary gearbox (4) and a second planetary gearbox (5) have a common ring gear (20); and
- wherein a second planet carrier (19) of the second planetary gearbox (5) is coupled to a sun gear of a third planetary gearbox (6), wherein the third planetary gearbox (6) has a ring gear (21) which is fixed in relation to the foot pedal crankshaft (2).

4. Bottom bracket drive (1) according to Claim 3, **characterized in that** the first planet carrier (18) and the second planet carrier (19) are in each case configured so as to have multiple stages, in particular two stages, wherein each stage (22, 23) for transmitting torque is coupled to a dedicated sun gear (8, 9, 10, 11), and wherein in particular at least one of those sun gears (8, 9, 10, 11) that are coupled to one of the stages (22, 23) of the first planet carrier (18) or second planet carrier (19) have a freewheel assembly (17) to the associated shifting finger (12, 13, 14, 15).

5. Bottom bracket drive (1) according to Claim 3 or 4, **characterized in that** an electric traction motor (24) for transmitting torque is coupled to the second planet carrier (19), in particular by way of a reduction gearbox (25) .

6. Bottom bracket drive (1) according to one of the preceding claims, **characterized in that** the shifting fingers (12, 13, 14, 15) have openings (26) which for damping an impact of the shifting fingers (12, 13, 14, 15) on the blocking elements (16) by elastically deforming the shifting fingers (12, 13, 14, 15) extend parallel to the axial direction of the foot pedal crankshaft (2).

7. Bottom bracket drive (1) according to one of the preceding claims, **characterized in that** the blocking elements (16) have a slot (27) which is aligned so as to be parallel to the axial direction of the foot pedal crankshaft (2), and/or have spring elements for damping an impact of the shifting fingers (12, 13, 14, 15) on the blocking elements (16).

8. Bottom bracket drive (1) according to one of the preceding claims, **characterized in that** the shifting gate (7) is a single component having a drive, in particular by an electric motor, or a multiplicity of components which each have a dedicated drive, in particular a dedicated electric motor.

9. Bottom bracket drive (1) according to one of the preceding claims, **characterized by** a housing (28), wherein the housing (28) has a receptacle (29) for the shifting gate (7), and wherein the housing (28) on the receptacle (29) has at least one longitudinal slot (30) which is aligned so as to be parallel to the axial direction of the foot pedal crankshaft (2).

## Revendications

1. Entraînement de palier de pédalier (1) d'une bicyclette, comportant
• un axe de pédalier (2) qui est prévu pour être actionné par un conducteur,
• un ensemble de transmission (3) qui est disposé sur l'axe de pédalier (2) et comporte une pluralité d'engrenages planétaires (4, 5) reliés les uns aux autres,
• une coulisse de changement de vitesse (7) disposée de manière solidaire en rotation par rapport à l'axe de pédalier (2), laquelle coulisse est déplaçable le long d'une direction axiale (100) de l'axe de pédalier (2), la coulisse de changement de vitesse (7) comprenant des éléments de blocage (16),
**caractérisé en ce que** les pignons planétaires (8, 9, 10, 11) de l'engrenage planétaire (4, 5) comprennent respectivement un doigt de changement de vitesse (12, 13, 14, 15) qui s'étend radialement vers l'extérieur par rapport à l'axe de pédalier (7),
et
• les éléments de blocage (16) chevauchant au moins un doigt de changement de vitesse (8, 9, 10, 11) dans la direction radiale de l'axe de pédalier (2), de sorte que par déplacement de la coulisse de changement de vitesse (7), par chevauchement de doigts de changement de vitesse (8, 9, 10, 11) et d'éléments de blocage (16) à la fois dans la direction axiale et dans la direction radiale de l'axe de pédalier (7), une rotation de doigts de changement de vitesse individuels ou de plusieurs doigts de changement de vitesse (8, 9, 10, 11) autour de l'axe de pédalier (2) est empêchée, les éléments de blocage (16) étant disposés de telle sorte qu'un déplacement continu de la coulisse de changement de vitesse (7) le long d'une direction parallèle à la direction axiale de l'axe de pédalier (2) bloque tour à tour tous les doigts de changement de vitesse nécessaires de manière correspondante et mène à un changement montant ou descendant d'un rapport de multiplication de l'ensemble de transmission (3).

2. Entraînement de palier de pédalier (1) selon la revendication 1, **caractérisé en ce qu'**au moins une partie des doigts de changement de vitesse (8, 9, 10, 11) présente des étendues radiales de différentes longueurs à partir de l'axe de pédalier (2).

3. Entraînement de palier de pédalier (1) selon l'une des revendications précédentes, **caractérisé en ce qu'**une rotation de l'axe de pédalier (2) peut être transmise, en particulier par le biais d'une roue libre (17), à un premier porte-satellites (18) d'un premier engrenage planétaire (4),
• le premier engrenage planétaire (4) et un deuxième engrenage planétaire (5) comprenant une couronne commune (20), et
• un deuxième porte-satellites (19) du deuxième engrenage planétaire (5) étant accouplé à un pignon planétaire d'un troisième engrenage planétaire (6), le troisième engrenage planétaire (6) comprenant une couronne (21) fixée par rapport à l'axe de pédalier (2).

4. Entraînement de palier de pédalier (1) selon la revendication 3, **caractérisé en ce que** le premier porte-satellites (18) et/ou le deuxième porte-satellites (19) sont réalisés respectivement de manière polyétagée, en particulier de manière biétagée, chaque étage (22, 23) étant accouplé à un pignon planétaire propre (8, 9, 10, 11) pour la transmission de couple, et en particulier au moins un des pignons planétaires (8, 9, 10, 11) qui sont accouplés à l'un des étages (22, 23) du premier porte-satellites (18) ou du deuxième porte-satellites (19) comprenant une roue libre (17) vers le doigt de changement de vitesse (12, 13, 14, 15) associé.

5. Entraînement de palier de pédalier (1) selon la revendication 3 ou 4, **caractérisé en ce qu'**un moteur d'entraînement électrique (24) est accouplé, en particulier par le biais d'un engrenage réducteur (25), au deuxième porte-satellites (19) pour la transmission de couple.

6. Entraînement de palier de pédalier (1) selon l'une des revendications précédentes, **caractérisé en ce que** les doigts de changement de vitesse (12, 13, 14, 15) comprennent des ouvertures (26) s'étendant parallèlement à la direction axiale de l'axe de pédalier (2), afin d'amortir un choc des doigts de changement de vitesse (12, 13, 14, 15) contre les éléments de blocage (16) par déformation élastique des doigts de changement de vitesse (12, 13, 14, 15).

7. Entraînement de palier de pédalier (1) selon l'une des revendications précédentes, **caractérisé en ce que** les éléments de blocage (16) comprennent une fente (27) orientée parallèlement à la direction axiale de l'axe de pédalier (2) et/ou des éléments ressorts, afin d'amortir un choc des doigts de changement de vitesse (12, 13, 14, 15) contre les éléments de blocage (16).

8. Entraînement de palier de pédalier (1) selon l'une des revendications précédentes, **caractérisé en ce que** la coulisse de changement de vitesse (7) est un composant individuel doté d'un entraînement, en particulier par un moteur électrique, ou une pluralité de composants dotés respectivement d'un entraînement propre, en particulier d'un moteur électrique propre.

9. Entraînement de palier de pédalier (1) selon l'une des revendications précédentes, **caractérisé par** un boîtier (28), le boîtier (28) comprenant un logement (29) pour la coulisse de changement de vitesse (7), et le boîtier (28) comprenant au niveau du logement (29) au moins une fente longitudinale (30) qui est orientée parallèlement à la direction axiale de l'axe de pédalier (2) .
